# EUROPEAN PATENT SPECIFICATION

(11) **EP 2 664 185 B1**
(45) Date of publication and mention of the grant of the patent: **03.06.2015**
(21) Application number: 11701046.2
(22) Date of filing: 14.01.2011
(51) Int. Cl.: H04W 36/00

(54) **UPLINK CARRIER SELECTION FOR MULTI-CARRIER OPERATION**
UPLINK-TRÄGERAUSWAHL FÜR MEHRTRÄGERBETRIEB
SÉLECTION DE PORTEUSE DE LIAISON MONTANTE POUR FONCTIONNEMENT MULTIPORTEUSE

(43) Date of publication of application: 20.11.2013
(73) Proprietor: Nokia Solutions and Networks Oy, 02610 Espoo (FI)
(72) Inventor: ANGELOW, Iwajlo, 51-165 Wroclaw (PL); CHMIEL, Mieszko, 53-441 Wroclaw (PL); HWANG, Woonhee, 02180 Espoo (FI); SEBIRE, Benoist, Pierre, Tokyo 162-0825 (JP)
(74) Representative: Borgström, Markus
(86) International application number: PCT/EP2011/050426
(87) International publication number: WO 2012/095180

(56) References cited:
- WO-A1-2010/105145
- WO-A1-2011/003340
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 10)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.2.0, 18 December 2010 (2010-12-18) , pages 1-200, XP050462130, [retrieved on 2010-12-18] cited in the application
- RAPPORTEUR (SAMSUNG): "Introduction of Carrier Aggregation and UL/ DL MIMO", 3GPP DRAFT; 36331_CR0488R1_(REL-10)_R2-106856 ON INTRODUCTION OF CARRIER AGGREGATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jacksonville, USA; 20101115, 26 November 2010 (2010-11-26), XP050471764, [retrieved on 2010-11-26]

## Description

### Field of the invention

The present invention relates to an apparatus, a method, a system, and a computer program product related to uplink carrier selection. More particularly, the present invention relates to an apparatus, a method, a system, and a computer program product for uplink carrier selection for multi-carrier operation.

### Background of the invention

The present application is in the context of operation of a long-term evolution (LTE) network, more specifically in the context of operation of an Enhanced Universal Mobile Telecommunication System (UMTS) radio access network (E-UTRAN). More specifically, the application relates to a new scenario of operating a downlink carrier with multiple uplink carriers.

In a typical FDD case, the same channel bandwidth for both the UL and DL carrier is used. However, the UL carrier in some bands may be interfered by a satellite in some regions (e.g. band 24 in the US). Therefore, not all physical resource blocks (PRBs) may be utilized.

In order to overcome this problem, physical uplink control channel (PUCCH) blanking as described e.g. in US 2009/0290549 A1 might be used. This results in an uplink (UL) throughput loss.

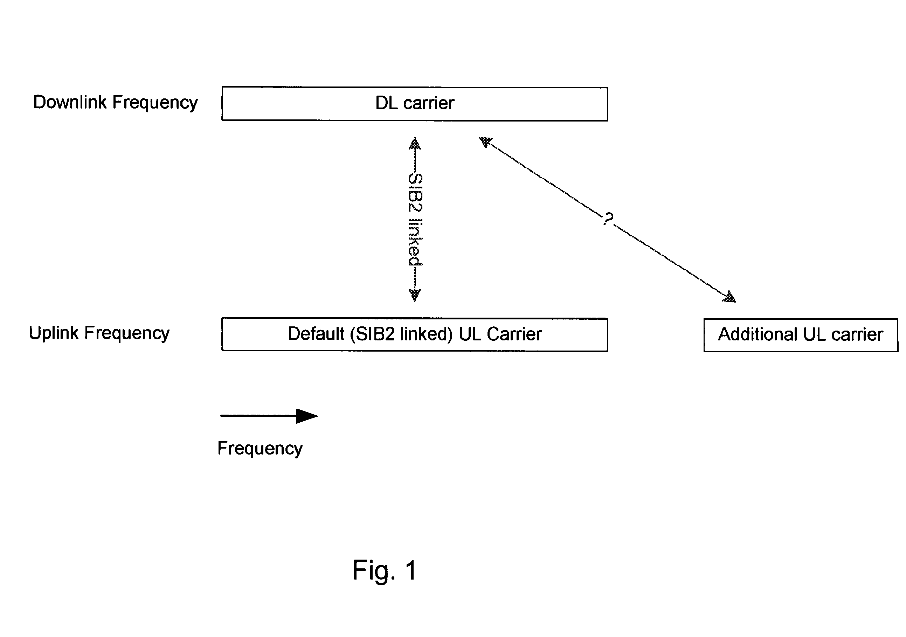

In order to compensate the UL throughput loss, an extra frequency segment may be used as an additional UL carrier, as shown in Fig. 1. Fig. 1 shows a downlink (DL) carrier to which an uplink (UL) carrier is linked via a system information block (SIB), in detail SIB2, which is broadcast on the DL carrier. A potentially available additional UL carrier is not linked through a broadcast SIB to the DL carrier.

According to the 3GPP specification (TS 36.331, v8.12.0), there is only one UL carrier (signaled in SIB2 of the DL) for each DL carrier. A terminal connected to a DL carrier will use only the one corresponding uplink carrier.

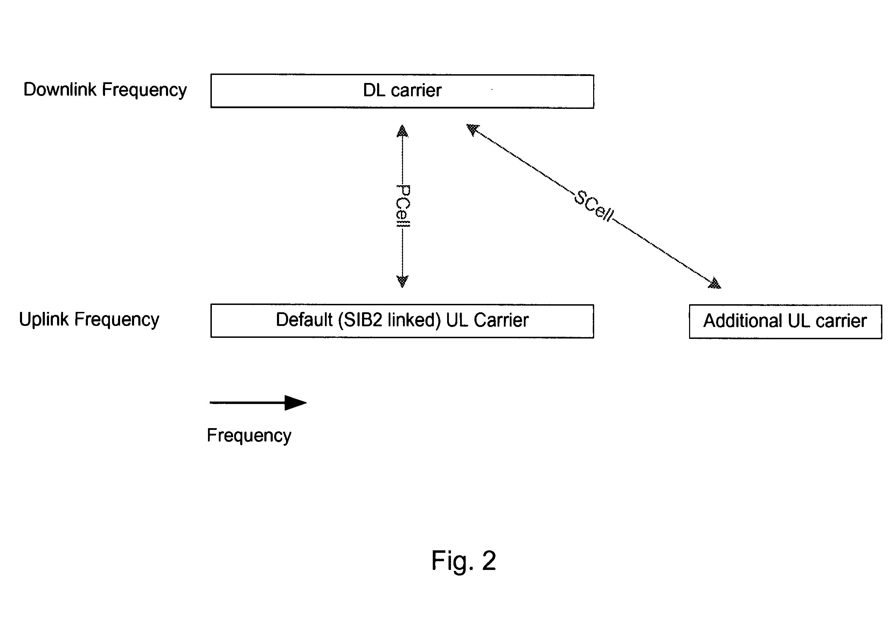

As one way, this problem may be solved by carrier aggregation as specified in LTE Rel-10. With carrier aggregation, it is possible to add secondary serving cells (SCells) through dedicated signalling in addition to a primary cell (PCell) [see 3GPP technical specification (TS) 36.300]. Because the signalling is dedicated, the network has the freedom to link DL resources to any UL ones. So for the additional UL carrier to be used in the scenario above, the network may define an SCell as the combination of the same DL carrier as the PCell but with an UL carrier equal to the additional UL carrier - as depicted in Fig. 2.

However, this solution has the following disadvantages: it requires an extensive specification process in 3GPP: firstly, a new band has to be specified or an existing band such as band 24 has to be modified; subsequently, a new carrier aggregation scenario would have to be specified. In case of a non-aggregation scenario, only a new band (i.e. a modification of band 24) will have to be specified.

Prior art which is related to this field of technology can be found in e.g. document WO 2011/003340 A1 disclosing a method for secondary carrier allocation.

### Summary of the invention

It is an object of the present invention to improve the prior art.

According to a first aspect of the invention, there is provided an apparatus, comprising handover performing means adapted to perform a handover to an additional uplink carrier with an additional uplink carrier frequency, wherein an information of the additional uplink carrier frequency is comprised in a received handover command on which the handover is based; and ignoring means adapted to ignore, for and after the handover, an information of a default uplink carrier frequency comprised in a received broadcasted system information in the target cell.

In the apparatus, the handover command may additionally comprise a second information of the default uplink carrier frequency, and the ignoring means may be additionally adapted to ignore, for the handover, the second information of the default uplink carrier frequency.

The apparatus may further comprise additional parameter obtaining means adapted to obtain an additional parameter of the additional uplink carrier from a received broadcasted uplink information, wherein the additional parameter is different from the additional uplink carrier frequency; and the apparatus may be adapted to apply the additional parameter while being linked to the additional uplink carrier.

In the apparatus, the additional parameter may comprise at least one of a bandwidth, a sounding reference signal, and a physical uplink control channel of the additional uplink carrier.

In the apparatus, the information of the additional uplink carrier frequency may further comprise information about at least one of a bandwidth, a sounding reference signal, and a physical uplink control channel of the additional uplink carrier.

According to a **second** aspect of the invention, there is provided a terminal equipment comprising an apparatus according to the first aspect.

According to a **third** aspect of the invention, there is provided an apparatus, comprising broadcasting means adapted to broadcast a system information to a plurality of terminal devices, wherein the system information comprises an information of a default uplink carrier frequency of a default uplink carrier; and handover command providing means adapted to provide a handover command to one of the plurality of terminal devices, wherein the handover command is directed to a handover to an additional uplink carrier with an additional uplink carrier frequency, the additional uplink carrier frequency being different from the default uplink carrier frequency.

In the apparatus, the handover command may additionally comprise an information of the default uplink carrier frequency.

In the apparatus, the broadcasting means may be additionally adapted to broadcast an additional parameter of the additional uplink carrier different from the additional uplink carrier frequency.

In the apparatus, the additional parameter may comprise at least one of a bandwidth, a sounding reference signal, and a physical uplink control channel of the additional uplink carrier.

In the apparatus, the information of the additional uplink carrier frequency may further comprise information about at least one of a bandwidth, a sounding reference signal, and a physical uplink control channel of the additional uplink carrier.

According to a **fourth** aspect of the invention, there is provided a base station comprising an apparatus according to the **third** aspect.

According to a **fifth** aspect of the invention, there is provided a system, comprising a base station apparatus according to the **third** aspect; and a terminal apparatus according to the first aspect; wherein the received broadcasted system information of the terminal apparatus comprises the system information broadcasted by the base station apparatus; and the received handover command of the terminal apparatus comprises handover command provided by the base station apparatus.

According to a **sixth** aspect of the invention, there is provided a method, comprising performing a handover to an additional uplink carrier with an additional uplink carrier frequency, wherein an information of the additional uplink carrier frequency is comprised in a received handover command on which the handover is based; and ignoring, for and after the handover, an information of a default uplink carrier frequency comprised in a received broadcasted system information in the target cell.

The method may be a method of multi-carrier operation.

In the method, the handover command may additionally comprise a second information of the default uplink carrier frequency, and the method may further comprise ignoring, for the handover, the second information of the default uplink carrier frequency.

The method may further comprise obtaining an additional parameter of the additional uplink carrier from a received broadcasted uplink information, wherein the additional parameter may be different from the additional uplink carrier frequency; and an apparatus performing the method may be adapted to apply the additional parameter while being linked to the additional uplink carrier.

In the method, the additional parameter may comprise at least one of a bandwidth, a sounding reference signal, and a physical uplink control channel of the additional uplink carrier.

In the method, the information of the additional uplink carrier frequency may further comprise information about at least one of a bandwidth, a sounding reference signal, and a physical uplink control channel of the additional uplink carrier.

According to a **seventh** aspect of the invention, there is provided a method, comprising broadcasting a system information to a plurality of terminal devices, wherein the system information comprises an information of a default uplink carrier frequency of a default uplink carrier; and providing a handover command to one of the plurality of terminal devices, wherein the handover command is directed to a handover to an additional uplink carrier with an additional uplink carrier frequency, the additional uplink carrier frequency being different from the default uplink carrier frequency.

The method may be a method of multi-carrier operation.

In the method, the handover command may additionally comprise an information of the default uplink carrier frequency.

The method may additionally comprise broadcasting an additional parameter of the additional uplink carrier different from the additional uplink carrier frequency.

In the method, the additional parameter may comprise at least one of a bandwidth, a sounding reference signal, and a physical uplink control channel of the additional uplink carrier.

In the method, the information of the additional uplink carrier frequency may further comprise information about at least one of a bandwidth, a sounding reference signal, and a physical uplink control channel of the additional uplink carrier.

According to **an eighth** aspect of the invention, there is provided a computer program product including a program comprising software code portions being arranged, when run on a processor of an apparatus, to perform the method according to the **sixth** or **seventh** aspect.

The computer program product may comprise a computer-readable medium on which the software code portions are stored, and/or wherein the program may be directly loadable into a memory of the processor.

Thus, no new carrier aggregation scenario has to be specified. Still furthermore, operators may employ embodiments of the invention in specific scenarios where additional UL carrier capacity compared to the default UL carrier is required. Layer 1 (physical layer) specifications may not be impacted.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of the preferred embodiments of the present invention which is to be taken in conjunction with the appended drawings, wherein
Fig. 1 shows a frequency scheme outlining a considered scenario;
Fig. 2 shows a frequency scheme outlining a carrier aggregation solution;
Fig. 3 shows a frequency scheme according to an embodiment of the invention;
Fig. 4 shows an apparatus according to an embodiment of the invention;
Fig. 5 shows a method according to an embodiment of the invention;
Fig. 6 shows an apparatus according to an embodiment of the invention; and
Fig. 7 shows a method according to an embodiment of the invention.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given for by way of example only, and that it is by no way intended to be understood as limiting the invention to the disclosed details.

Moreover, it is to be understood that the apparatus is configured to perform the corresponding method, although in some cases only the apparatus or only the method are described.

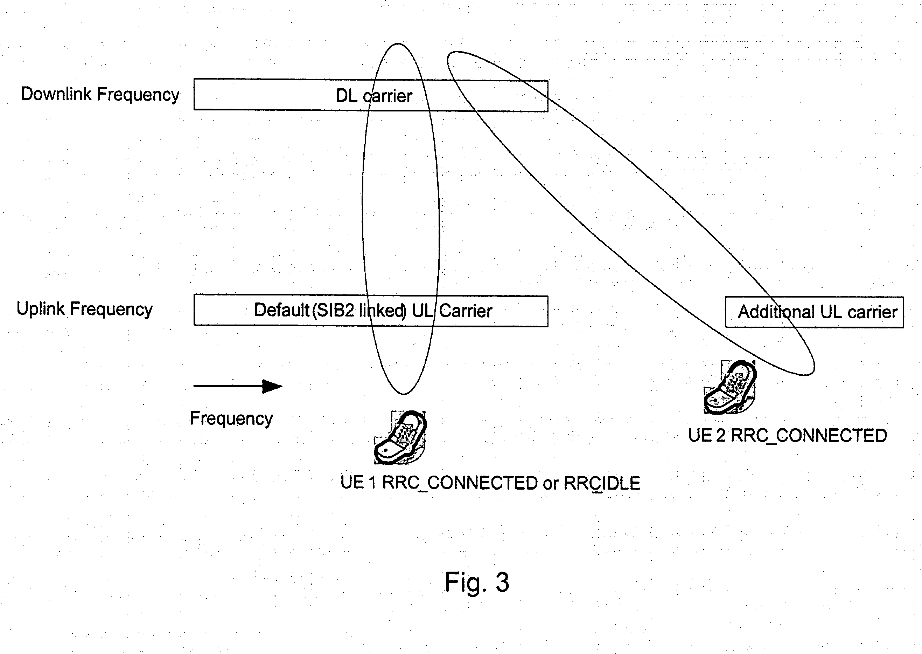

According to an embodiment of the invention, 1) a handover (HO) command (i.e. *RRCConnectionReconfiguration* including the *mobilityControlInfo*) is used to configure a user equipment (UE) to use a different UL carrier than the default one, as e.g. indicated by SIB2; and 2) introduce new rules in order for the UE to cope with the inconsistency between the parameters provided in the HO command to the ones broadcasted in the target cell. A corresponding frequency scheme is shown in Fig. 3.

Ad 1): A HO command may convey the information necessary for the UE to identify and access the target cell. Instead or in addition of signalling the information corresponding to the SIB2-linked UL carrier, information corresponding to the additional UL carrier may be signalled.

Ad 2): After a HO, the terminal may acquire system information from SIBs broadcasted in the new cell, i.e. the target cell of the HO command. There are two main reasons for this: mostly because the HO command may not provide all needed information, but also because SIB may be updated. However, the information related to the UL carrier provided by the HO command may differ from the one broadcasted: some parameters may differ, for example UL carrier frequency, UL bandwidth (BW), sounding reference signal (SRS) configuration, and/or PUCCH configuration. In some embodiments, only the signalled UL carrier frequency is inconsistent. In other embodiments, the UL carrier bandwidth is inconsistent, too. Other UL related parameters in the default UL carrier and the additional UL carrier may be the same or not for different embodiments.

To solve this inconsistency in order for the additional carrier to be used by the UE, the following exemplary methods may be applied:
1. The UE may ignore the parameters from broadcast (SIB) which are inconsistent with the dedicated signalling. This is in contrast to 3GPP release 8, where the broadcast parameters always take precedence [see 3GPP TS 36.331].
2. Some parameters which are related to UL may be duplicated in the broadcasted signalling (one set for the SIB2 linked UL carrier ("default uplink carrier") and another set of the non-default UL carrier ("additional uplink carrier")). These parameters may comprise at least one parameter which is different from the respective uplink carrier frequency, such as - but not limited to - a bandwidth, a sounding reference signal, and a physical uplink control channel. The UE may apply the broadcasted parameter when linked to the additional uplink carrier.

In some embodiments, the broadcasted parameters of the additional UL carrier may comprise additionally the frequency of the additional uplink carrier. This may be advantageous if there are more than one additional uplink carriers. Thus, the broadcasted parameter may be associated to the correct additional uplink carrier. Alternatively, the association may be performed e.g. by a corresponding number of the additional uplink carrier.

In some embodiments, one or more of the broadcasted parameters may be changed, e.g. by the operator or automatically according to some rule. Then, a UE being linked to the additional uplink carrier may apply the new broadcasted parameter without the need of performing another handover. Thus, an advantage of this scenario is that the network may adapt the configuration of the additional carrier by broadcast signalling when desired.
3. The network may signal the parameters of the additional UL carrier that are different from the ones in the SIB as dedicated resources to the UE during the handover procedure. According to this method, the dedicated signalling may contain two sets of the uplink parameters: one consistent with SIBs broadcast, and another set for the additional UL carrier. According to this method, the UE may keep the contents of dedicated parameters after the handover and may not overwrite them with SIB contents, unless specified otherwise (e.g. at handover to another cell).

An advantage of this method is that it may be backward compatible. In detail, it may be applied to UEs that do not support ignoring the SIB based (default) UL carrier. Note that because the solution including the three methods outlined above relies on dedicated signalling, it does not impact idle mode mobility and SIB2 linking to identify the UL to access when requiring a radio resource control (RRC) connection from idle mode.

According to embodiments of the invention, an additional UL carrier may be used without carrier aggregation. Furthermore, the solution does not impact layer 1 (physical layer) specifications:
- Downlink Control information (DCI) construction in case the uplink bandwidth is different from the downlink bandwidth is considered by 3GPP TS 36.212.
- Physical hybrid automatic repeat request indicator channel (PHICH) collision: the used PHICH index depends on the physical uplink shared channel (PUSCH) allocation. Using two UL carriers with one DL carrier may possibly cause some collision problems. However, this issue may be solved by an eNodeB implementation and the use of an additional offset in the UL grant (demodulation reference signal (DM-RS) cyclic shift). For example, the appropriate amount of PHICH resources may be configured and, when the PHICH group and the PHICH index within the group collide for some UEs, due to the same PUSCH allocation in the two UL carriers, the eNodeB may avoid the collision by modifying the DM-RS cyclic shift and hence modyfing the PHICH group and the index within the group.
- ACK/NACK: the index of the used UL acknowledgement/non-acknowledgement (ACK/NACK) depends on the PDCCH allocation. Thus, two UL carriers with one DL carrier may possibly cause some inefficiency but this may be handled by a eNodeB implementation and appropriate setting of parameters. For example, the ACK/NACK resources not used by the actual signalling may be used for data (PUSCH) transmission.

The solution basically may rely on the existing mechanism for the HO command which may be adapted and may require new rules in order to control UE behaviour with respect to an inconsistency between the parameters provided in the HO command and the ones broadcasted.

UE capability information may be extended with the information if the discussed frequency band is supported. The UE may indicate in its capabilities if transmission on the additional non-default UL carrier is supported. The support for this scenario means that the UE would be required to have two TX RF chains.

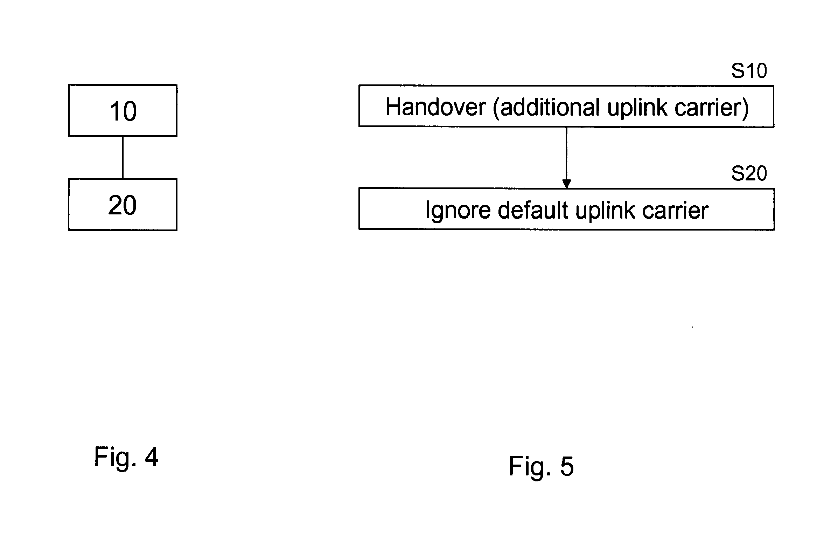

Fig. 4 shows an apparatus according to an embodiment of the invention. The apparatus may be a user equipment. Fig. 5 shows a method according to an embodiment of the invention. The apparatus according to Fig. 4 may perform the method of Fig. 5 but is not limited to this method. The method of Fig. 5 may be performed by the apparatus of Fig. 4 but is not limited to being performed by this apparatus.

The apparatus comprises a handover performing means 10, and an ignoring means 20.

The apparatus may perform a handover by the handover performing means 10 (step S10). If the handover command on which the handover is based comprises the frequency of an additional uplink carrier, the handover is performed to the additional uplink carrier. The additional uplink carrier is different from the default uplink carrier which is broadcasted e.g. in a system information block such as SIB2. The handover command is dedicated to the apparatus.

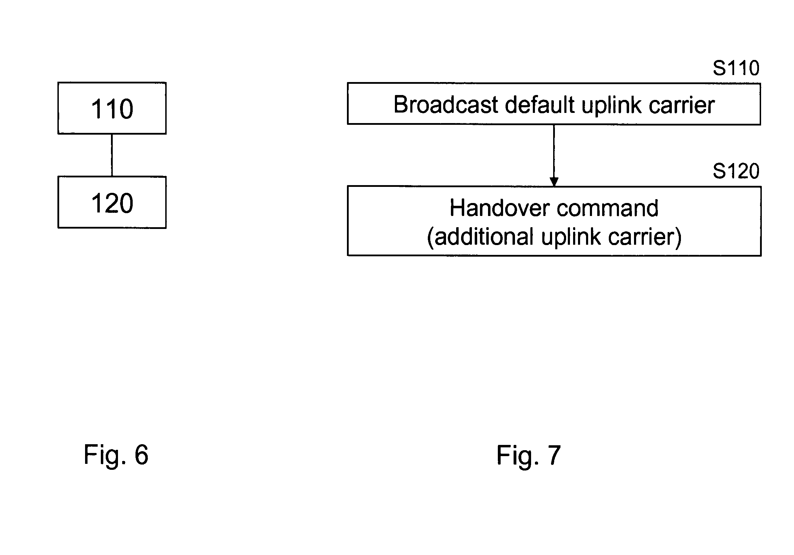

At the handover and after the handover is performed, the apparatus ignores the broadcasted default carrier frequency (step S20). This is achieved by the ignoring means 20. Thus, the apparatus performs the handover to the additional uplink carrier and remains linked to the additional uplink carrier until otherwise instructed, e.g. to perform another handover. Fig. 6 shows an apparatus according to an embodiment of the invention. The apparatus may be a base station such as an eNodeB. Fig. 7 shows a method according to an embodiment of the invention. The apparatus according to Fig. 6 may perform the method of Fig. 7 but is not limited to this method. The method of Fig. 7 may be performed by the apparatus of Fig. 6 but is not limited to being performed by this apparatus.

The apparatus comprises a broadcasting means 110, and a handover command providing means 120.

The broadcasting means 110 broadcasts system information, e.g. system information blocks, to a plurality of terminal devices (S110). E.g., the system information may be broadcasted to all terminal devices within a coverage area of a base station the broadcasting means 110 belongs to. The system information comprises a default uplink carrier frequency to which the terminal devices may be linked or perform a handover.

If one of the terminal devices will perform a handover to the base station, the handover command providing means 120 may provide, dedicated to this terminal device, a handover command comprising an uplink carrier frequency of an additional uplink carrier (S120). The additional uplink carrier frequency may be different from the default uplink carrier frequency.

Embodiments of the invention are described with respect to one additional uplink carrier. However, in some embodiments, more than one additional uplink carrier may be employed.

Embodiments of the invention are described with respect to an E-UTRAN network. However, some embodiments of the invention may be employed in other cellular networks where information of an uplink carrier is generally provided by a broadcasted information, such as UTRAN.

The SIB2 linked UL carrier (default uplink carrier) and the additional UL carrier may have the same or different bandwidths.

In some embodiments, the additional uplink carrier has a higher frequency than the default (SIB2 linked) UL carrier. In other embodiments, the relationship of the frequencies may be inversed. If there are more than one additional UL carrier, all, some or none of them may have a higher frequency than the default UL carrier, and none, some, or all of them may have a lower frequency than the default UL carrier.

Embodiments of the invention may be employed together with PUCCH blanking in order to blank carriers affected by other transmitters such as satellites or other wireless communication standards.

Embodiments of the invention are described with respect to a UE. However, embodiments of the invention may be employed in other terminals than UEs.

If not otherwise stated or otherwise made clear from the context, the statement that two entities are different means that they are differently addressed in the communication network. It does not necessarily mean that they are based on different hardware. That is, each of the entities described in the present description may be based on a different hardware, or some or all of the entities may be based on the same hardware.

According to the above description, it should thus be apparent that exemplary embodiments of the present invention provide, for example a host, or a component thereof, an apparatus embodying the same, a method for controlling and/or operating the same, and computer program(s) controlling and/or operating the same as well as mediums carrying such computer program(s) and forming computer program product(s). Further exemplary embodiments of the present invention provide, for example a router, or a component thereof, an apparatus embodying the same, a method for controlling and/or operating the same, and computer program(s) controlling and/or operating the same as well as mediums carrying such computer program(s) and forming computer program product(s) controlling and/or operating the same as well as mediums carrying such computer program(s) and forming computer program product(s).

Implementations of any of the above described blocks, apparatuses, systems, techniques or methods include, as non limiting examples, implementations as hardware, software, firmware, special purpose circuits or logic, general purpose hardware or controller or other computing devices, or some combination thereof.

It is to be understood that what is described above is what is presently considered the preferred embodiments of the present invention. However, it should be noted that the description of the preferred embodiments is given by way of example only and that various modifications may be made without departing from the scope of the invention as defined by the appended claims.

## Claims

1. Apparatus, comprising
handover performing means (10) adapted to perform a handover to an additional uplink carrier with an additional uplink carrier frequency, **characterized in that** an information of the additional uplink carrier frequency is comprised in a received handover command on which the handover is based; and the apparatus comprises
ignoring means (20) adapted to ignore, for and after the handover, an information of a default uplink carrier frequency comprised in a received broadcasted system information in the target cell.

2. The apparatus according to claim 1, wherein
the handover command additionally comprises a second information of the default uplink carrier frequency, and
the ignoring means is additionally adapted to ignore, for the handover, the second information of the default uplink carrier frequency.

3. The apparatus according to claim 1 or 2, further comprising
additional parameter obtaining means adapted to obtain an additional parameter of the additional uplink carrier from a received broadcasted uplink information, wherein
the additional parameter is different from the additional uplink carrier frequency; and
the apparatus is adapted to apply the additional parameter while being linked to the additional uplink carrier.

4. The apparatus according to claim 3, wherein the additional parameter comprises at least one of a bandwidth, a sounding reference signal, and a physical uplink control channel of the additional uplink carrier.

5. The apparatus according to any of claims 1 to 4, wherein the information of the additional uplink carrier frequency further comprises information about at least one of a bandwidth, a sounding reference signal, and a physical uplink control channel of the additional uplink carrier.

6. Terminal equipment comprising an apparatus according to any of clams 1 to 5.

7. Apparatus, comprising
broadcasting means (110) adapted to broadcast a system information to a plurality of terminal devices, **characterized in that** the system information comprises an information of a default uplink carrier frequency of a default uplink carrier; and the apparatus comprises
handover command providing means (120) adapted to provide a handover command to one of the plurality of terminal devices, wherein the handover command is directed to a handover to an additional uplink carrier with an additional uplink carrier frequency, the additional uplink carrier frequency being different from the default uplink carrier frequency.

8. The apparatus according to claim 7, wherein the handover command additionally comprises an information of the default uplink carrier frequency.

9. The apparatus according to claim 7 or 8, wherein the broadcasting means is additionally adapted to broadcast an additional parameter of the additional uplink carrier different from the additional uplink carrier frequency.

10. The apparatus according to claim 9, wherein the additional parameter comprises at least one of a bandwidth, a sounding reference signal, and a physical uplink control channel of the additional uplink carrier.

11. The apparatus according to any of claims 7 to 10, wherein the information of the additional uplink carrier frequency further comprises information about at least one of a bandwidth, a sounding reference signal, and a physical uplink control channel of the additional uplink carrier.

12. Base station comprising an apparatus according to any of claims 7 to 11.

13. System, comprising
a base station according claim 12; and
a terminal equipment according to claim 6; wherein
the received broadcasted system information of the terminal equipment comprises the system information broadcasted by the base station; and
the received handover command of the terminal equipment comprises handover command provided by the base station.

14. Method, comprising
performing a handover (S10) to an additional uplink carrier with an additional uplink carrier frequency, **characterized in that** an information of the additional uplink carrier frequency is comprised in a received handover command on which the handover is based; and the method comprises
ignoring (S20), for and after the handover, an information of a default uplink carrier frequency comprised in a received broadcasted system information in the target cell.

15. The method according to claim 14, wherein
the handover command additionally comprises a second information of the default uplink carrier frequency, the method further comprising
ignoring, for the handover, the second information of the default uplink carrier frequency.

16. The method according to claim 14 or 15, further comprising
obtaining an additional parameter of the additional uplink carrier from a received broadcasted uplink information, wherein
the additional parameter is different from the additional uplink carrier frequency; and
an apparatus performing the method is adapted to apply the additional parameter while being linked to the additional uplink carrier.

17. The method according to claim 16, wherein the additional parameter comprises at least one of a bandwidth, a sounding reference signal, and a physical uplink control channel of the additional uplink carrier.

18. The method according to any of claims 14 to 17, wherein the information of the additional uplink carrier frequency further comprises information about at least one of a bandwidth, a sounding reference signal, and a physical uplink control channel of the additional uplink carrier.

19. Method, comprising
broadcasting (S110) a system information to a plurality of terminal devices, **characterized in that** the system information comprises an information of a default uplink carrier frequency of a default uplink carrier; and the method comprises
providing a handover command (S120) to one of the plurality of terminal devices, wherein the handover command is directed to a handover to an additional uplink carrier with an additional uplink carrier frequency, the additional uplink carrier frequency being different from the default uplink carrier frequency.

20. The method according to claim 19, wherein the handover command additionally comprises an information of the default uplink carrier frequency.

21. The method according to claim 19 or 20, additionally comprising broadcasting an additional parameter of the additional uplink carrier different from the additional uplink carrier frequency.

22. The method according to claim 21, wherein the additional parameter comprises at least one of a bandwidth, a sounding reference signal, and a physical uplink control channel of the additional uplink carrier.

23. The method according to any of claims 19 to 22, wherein the information of the additional uplink carrier frequency further comprises information about at least one of a bandwidth, a sounding reference signal, and a physical uplink control channel of the additional uplink carrier.

24. A computer program product including a program comprising software code portions being arranged, when run on a processor of an apparatus, to perform the method according to any one of claims 14 to 23.

25. The computer program product according to claim 24, wherein the computer program product comprises a computer-readable medium on which the software code portions are stored, and/or wherein the program is directly loadable into a memory of the processor.

## Patentansprüche

1. Vorrichtung, die Folgendes umfasst:
Übergabeausführungsmittel (10), die ausgelegt sind, eine Übergabe an einen zusätzlichen Aufwärtsstreckenträger mit einer zusätzlichen Aufwärtsstreckenfrequenz auszuführen, **dadurch gekennzeichnet, dass** Informationen der zusätzlichen Aufwärtsstreckenfrequenz in einem empfangenen Übergabebefehl, auf dem die Übergabe beruht, enthalten sind; und die Vorrichtung Folgendes umfasst:
Nichtberücksichtigungsmittel (20), die ausgelegt sind, vor und nach der Übergabe Informationen einer vorgegebenen Aufwärtsstreckenträgerfrequenz, die in empfangenen gesendeten Systeminformationen in der Zielzelle enthalten sind, nicht zu berücksichtigen.

2. Vorrichtung nach Anspruch 1, wobei
der Übergabebefehl zusätzlich zweite Informationen der vorgegebenen Aufwärtsstreckenträgerfrequenz umfasst und
die Nichtberücksichtigungsmittel zusätzlich ausgelegt sind, für die Übergabe die zweiten Informationen der vorgegebenen Aufwärtsstreckenträgerfrequenz nicht zu berücksichtigen.

3. Vorrichtung nach Anspruch 1 oder 2, die ferner Folgendes umfasst:
Mittel zum Erhalten eines zusätzlichen Parameters, die ausgelegt sind, einen zusätzlichen Parameter des zusätzlichen Aufwärtsstreckenträgers aus empfangenen gesendeten Aufwärtsstreckeninformationen zu erhalten, wobei
der zusätzliche Parameter von der zusätzlichen Aufwärtsstreckenträgerfrequenz verschieden ist; und
die Vorrichtung ausgelegt ist, den zusätzlichen Parameter anzuwenden, während sie mit dem zusätzlichen Aufwärtsstreckenträger verbunden ist.

4. Vorrichtung nach Anspruch 3, wobei der zusätzliche Parameter eine Bandbreite und/oder ein Sondierungsreferenzsignal und/oder einen physikalischen Aufwärtsstreckensteuerkanal des zusätzlichen Aufwärtsstreckenträgers umfasst.

5. Vorrichtung nach einem der Ansprüche 1 bis 4, wobei die Informationen der zusätzlichen Aufwärtsstreckenträgerfrequenz ferner Informationen über eine Bandbreite und/oder ein Sondierungsreferenzsignal und/oder einen physikalischen Aufwärtsstreckensteuerkanal des zusätzlichen Aufwärtsstreckenträgers umfassen.

6. Endgerätausstattung, die eine Vorrichtung nach einem der Ansprüche 1 bis 5 umfasst.

7. Vorrichtung, die Folgendes umfasst:
Sendemittel (110), die ausgelegt sind, Systeminformationen an mehrere Endgerätvorrichtungen zu senden, **dadurch gekennzeichnet, dass** die Systeminformationen Informationen einer vorgegebenen Aufwärtsstreckenträgerfrequenz eines vorgegebenen Aufwärtsstreckenträgers umfassen; und die Vorrichtung Folgendes umfasst:
Übergabebefehlsliefermittel (120), die ausgelegt sind, einen Übergabebefehl an eine der mehreren Endgerätvorrichtungen zu liefern, wobei der Übergabebefehl auf eine Übergabe an einen zusätzlichen Aufwärtsstreckenträger mit einer zusätzlichen Aufwärtsstreckenträgerfrequenz gerichtet ist, wobei die zusätzliche Aufwärtsstreckenträgerfrequenz von der vorgegebenen Aufwärtsstreckenträgerfrequenz verschieden ist.

8. Vorrichtung nach Anspruch 7, wobei der Übergabebefehl zusätzlich Informationen der vorgegebenen Aufwärtsstreckenträgerfrequenz umfasst.

9. Vorrichtung nach Anspruch 7 oder 8, wobei die Sendemittel zusätzlich ausgelegt sind, einen zusätzlichen Parameter des zusätzlichen Aufwärtsstreckenträgers, der von der zusätzlichen Aufwärtsstreckenträgerfrequenz verschieden ist, zu senden.

10. Vorrichtung nach Anspruch 9, wobei der zusätzliche Parameter eine Bandbreite und/oder ein Sondierungsreferenzsignal und/oder einen physikalischen Aufwärtsstreckensteuerkanal des zusätzlichen Aufwärtsstreckenträgers umfasst.

11. Vorrichtung nach einem der Ansprüche 7 bis 10, wobei die Informationen der zusätzlichen Aufwärtsstreckenträgerfrequenz ferner Informationen über eine Bandbreite und/oder ein Sondierungsreferenzsignal und/oder einen physikalischen Aufwärtsstreckensteuerkanal des zusätzlichen Aufwärtsstreckenträgers umfassen.

12. Basisstation, die eine Vorrichtung nach einem der Ansprüche 7 bis 11 umfasst.

13. System, das Folgendes umfasst:
eine Basisstation nach Anspruch 12; und
eine Endgerätausstattung nach Anspruch 6; wobei
die empfangenen gesendeten Systeminformationen der Endgerätausstattung die durch die Basisstation gesendeten Systeminformationen umfassen; und
der empfangene Übergabebefehl der Endgerätausstattung einen Übergabebefehl umfasst, der durch die Basisstation geliefert wurde.

14. Verfahren, das Folgendes umfasst:
Ausführen einer Übergabe (S10) an einen zusätzlichen Aufwärtsstreckenträger mit einer zusätzlichen Aufwärtsstreckenträgerfrequenz, **dadurch gekennzeichnet, dass** Informationen der zusätzlichen Aufwärtsstreckenträgerfrequenz in einem empfangenen Übergabebefehl, auf dem die Übergabe beruht, enthalten ist; und das Verfahren Folgendes umfasst:
Nichtberücksichtigen (S20) vor und nach der Übergabe von Informationen einer vorgegebenen Aufwärtsstreckenträgerfrequenz, die in empfangenen gesendeten Systeminformationen in der Zielzelle enthalten sind.

15. Verfahren nach Anspruch 14, wobei
der Übergabebefehl zusätzlich zweite Informationen der vorgegebenen Aufwärtsstreckenträgerfrequenz umfasst, wobei das Verfahren ferner Folgendes umfasst:
Nichtberücksichtigen der zweiten Informationen der vorgegebenen Aufwärtsstreckenträgerfrequenz für die Übergabe.

16. Verfahren nach Anspruch 14 oder 15, das ferner Folgendes umfasst:
Erhalten eines zusätzlichen Parameters des zusätzlichen Aufwärtsstreckenträgers aus empfangenen gesendeten Aufwärtsstreckeninformationen, wobei
der zusätzliche Parameter von der zusätzlichen Aufwärtsstreckenträgerfrequenz verschieden ist; und
wobei eine Vorrichtung, die das Verfahren ausführt, ausgelegt ist, den zusätzlichen Parameter anzuwenden, während sie mit dem zusätzlichen Aufwärtsstreckenträger verbunden ist.

17. Verfahren nach Anspruch 16, wobei der zusätzliche Parameter eine Bandbreite und/oder ein Sondierungsreferenzsignal und/oder einen physikalischen Aufwärtsstreckensteuerkanal des zusätzlichen Aufwärtsstreckenträgers umfasst.

18. Verfahren nach einem der Ansprüche 14 bis 17, wobei die Informationen der zusätzlichen Aufwärtsstreckenträgerfrequenz ferner Informationen über eine Bandbreite und/oder ein Sondierungsreferenzsignal und/oder einen physikalischen Aufwärtsstreckensteuerkanal des zusätzlichen Aufwärtsstreckenträgers umfassen.

19. Verfahren, das Folgendes umfasst:
Senden (S110) von Systeminformationen an mehrere Endgerätvorrichtungen, **dadurch gekennzeichnet, dass** die Systeminformationen Informationen einer vorgegebenen Aufwärtsstreckenträgerfrequenz eines vorgegebenen Aufwärtsstreckenträgers umfassen; und das Verfahren Folgendes umfasst:
Liefern eines Übergabebefehls (S120) an eine der mehreren Endgerätvorrichtungen, wobei der Übergabebefehl (S120) auf eine Übergabe an einen zusätzlichen Aufwärtsstreckenträger mit einer zusätzlichen Aufwärtsstreckenträgerfrequenz gerichtet ist, wobei die zusätzliche Aufwärtsstreckenträgerfrequenz von der vorgegebenen Aufwärtsstreckenträgerfrequenz verschieden ist.

20. Verfahren nach Anspruch 19, wobei der Übergabebefehl zusätzlich Informationen der vorgegebenen Aufwärtsstreckenträgerfrequenz umfasst.

21. Verfahren nach Anspruch 19 oder 20, das zusätzlich umfasst, einen zusätzlichen Parameter des zusätzlichen Aufwärtsstreckenträgers, der von der zusätzlichen Aufwärtsstreckenträgerfrequenz verschieden ist, zu senden.

22. Verfahren nach Anspruch 21, wobei der zusätzliche Parameter eine Bandbreite und/oder ein Sondierungsreferenzsignal und/oder einen physikalischen Aufwärtsstreckensteuerkanal des zusätzlichen Aufwärtsstreckenträgers umfasst.

23. Verfahren nach einem der Ansprüche 19 bis 22, wobei die Informationen der zusätzlichen Aufwärtsstreckenträgerfrequenz ferner Informationen über eine Bandbreite und/oder ein Sondierungsreferenzsignal und/oder einen physikalischen Aufwärtsstreckensteuerkanal des zusätzlichen Aufwärtsstreckenträgers umfassen.

24. Computerprogrammprodukt, das ein Programm enthält, das Softwarecodeabschnitte umfasst, die ausgelegt sind, wenn sie auf einem Prozessor einer Vorrichtung laufen, das Verfahren nach einem der Ansprüche 14 bis 23 auszuführen.

25. Computerprogrammprodukt nach Anspruch 24, wobei das Computerprogrammprodukt ein computerlesbares Medium umfasst, auf dem Softwarecodeabschnitte gespeichert sind und/oder wobei das Programm unmittelbar in einen Speicher des Prozessors ladbar ist.

## Revendications

1. Un appareil comprenant
un moyen d'exécution d'un transfert (10) adapté de façon à exécuter un transfert vers une porteuse en liaison montante additionnelle avec une fréquence de porteuse en liaison montante additionnelle, **caractérisé en ce qu'**une information relative à la fréquence de porteuse en liaison montante additionnelle est incluse dans une commande de transfert reçue sur laquelle le transfert est basé, et l'appareil comprend
un moyen de rejet (20) adapté de façon à ignorer, pour et après le transfert, une information relative à une fréquence de porteuse en liaison montante par défaut incluse dans une information système radiodiffusée reçue dans la cellule cible.

2. L'appareil selon la revendication 1, dans lequel
la commande de transfert comprend en outre une deuxième information relative à la fréquence de porteuse en liaison montante par défaut, et
le moyen de rejet est en outre adapté de façon à ignorer, pour le transfert, la deuxième information relative à la fréquence de porteuse en liaison montante par défaut.

3. L'appareil selon la revendication 1 ou 2, comprenant en outre
un moyen d'obtention d'un paramètre additionnel adapté de façon à obtenir un paramètre additionnel de la porteuse en liaison montante additionnelle à partir d'une information en liaison montante radiodiffusée reçue, dans lequel
le paramètre additionnel est différent de la fréquence de porteuse en liaison montante additionnelle, et
l'appareil est adapté de façon à appliquer le paramètre additionnel pendant qu'il est relié à la porteuse en liaison montante additionnelle.

4. L'appareil selon la revendication 3, dans lequel le paramètre additionnel comprend au moins un paramètre parmi une bande passante, un signal de référence de sondage et un canal de commande en liaison montante physique de la porteuse en liaison montante additionnelle.

5. L'appareil selon l'une quelconque des revendications 1 à 4, dans lequel l'information relative à la fréquence de porteuse en liaison montante additionnelle comprend en outre une information relative à au moins une information parmi une bande passante, un signal de référence de sondage et un canal de commande en liaison montante physique de la porteuse en liaison montante additionnelle.

6. Un équipement terminal comprenant un appareil selon l'une quelconque des revendications 1 à 5.

7. Un appareil comprenant
un moyen de radiodiffusion (110) adapté de façon à radiodiffuser une information système à une pluralité de dispositifs terminaux, **caractérisé en ce que** l'information système comprend une information relative à une fréquence de porteuse en liaison montante par défaut d'une porteuse en liaison montante par défaut, et l'appareil comprend
un moyen de fourniture d'une commande de transfert (120) adapté de façon à fournir une commande de transfert à un dispositif de la pluralité de dispositifs terminaux, la commande de transfert étant dirigée vers un transfert vers une porteuse en liaison montante additionnelle avec une fréquence de porteuse en liaison montante additionnelle, la fréquence de porteuse en liaison montante additionnelle étant différente de la fréquence de porteuse en liaison montante par défaut.

8. L'appareil selon la revendication 7, dans lequel la commande de transfert comprend en outre une information relative à la fréquence de porteuse en liaison montante par défaut.

9. L'appareil selon la revendication 7 ou 8, dans lequel le moyen de radiodiffusion est en outre adapté de façon à radiodiffuser un paramètre additionnel de la porteuse en liaison montante additionnelle différent de la fréquence de porteuse en liaison montante additionnelle.

10. L'appareil selon la revendication 9, dans lequel le paramètre additionnel comprend au moins un paramètre parmi une bande passante, un signal de référence de sondage et un canal de commande en liaison montante physique de la porteuse en liaison montante additionnelle.

11. L'appareil selon l'une quelconque des revendications 7 à 10, dans lequel l'information relative à la fréquence de porteuse en liaison montante additionnelle comprend en outre une information relative à au moins une information parmi une bande passante, un signal de référence de sondage et un canal de commande en liaison montante physique de la porteuse en liaison montante additionnelle.

12. Une station de base comprenant un appareil selon l'une quelconque des revendications 7 à 11.

13. Un système comprenant
une station de base selon la revendication 12, et
un équipement terminal selon la revendication 6, dans lequel
l'information système radiodiffusée reçue de l'équipement terminal comprend l'information système radiodiffusée par la station de base, et
la commande de transfert reçue de l'équipement terminal comprend la commande de transfert fournie par la station de base.

14. Un procédé comprenant
l'exécution d'un transfert (S10) vers une porteuse en liaison montante additionnelle avec une fréquence de porteuse en liaison montante additionnelle, **caractérisé en ce qu'**une information relative à la fréquence de porteuse en liaison montante additionnelle est incluse dans une commande de transfert reçue sur laquelle le transfert est basé, et le procédé comprend
le rejet (S20), pour et après le transfert, d'une information relative à une fréquence de porteuse en liaison montante par défaut incluse dans une information système radiodiffusée reçue dans la cellule cible.

15. Le procédé selon la revendication 14, dans lequel
la commande de transfert comprend en outre une deuxième information relative à la fréquence de porteuse en liaison montante par défaut, le procédé comprenant en outre
le rejet, pour le transfert, de la deuxième information relative à la fréquence de porteuse en liaison montante par défaut.

16. Le procédé selon la revendication 14 ou 15, comprenant en outre
l'obtention d'un paramètre additionnel de la porteuse en liaison montante additionnelle à partir d'une information en liaison montante radiodiffusée reçue, dans lequel
le paramètre additionnel est différent de la fréquence de porteuse en liaison montante additionnelle, et
un appareil exécutant le procédé est adapté de façon à appliquer le paramètre additionnel pendant qu'il est relié à la porteuse en liaison montante additionnelle.

17. Le procédé selon la revendication 16, dans lequel le paramètre additionnel comprend au moins un paramètre parmi une bande passante, un signal de référence de sondage et un canal de commande en liaison montante physique de la porteuse en liaison montante additionnelle.

18. Le procédé selon l'une quelconque des revendications 14 à 17, dans lequel l'information relative à la fréquence de porteuse en liaison montante additionnelle comprend en outre une information relative à au moins une information parmi une bande passante, un signal de référence de sondage et un canal de commande en liaison montante physique de la porteuse en liaison montante additionnelle.

19. Un procédé comprenant
la radiodiffusion (S110) d'une information système vers une pluralité de dispositifs terminaux, **caractérisé en ce que** l'information système comprend une information relative à une fréquence de porteuse en liaison montante par défaut d'une porteuse en liaison montante par défaut, et le procédé comprend
la fourniture d'une commande de transfert (S120) vers un dispositif de la pluralité de dispositifs terminaux, la commande de transfert étant dirigée vers un transfert vers une porteuse en liaison montante additionnelle avec une fréquence de porteuse en liaison montante additionnelle, la fréquence de porteuse en liaison montante additionnelle étant différente de la fréquence de porteuse en liaison montante par défaut.

20. Le procédé selon la revendication 19, dans lequel la commande de transfert comprend en outre une information relative à la fréquence de porteuse en liaison montante par défaut.

21. Le procédé selon la revendication 19 ou 20, comprenant en outre la radiodiffusion d'un paramètre additionnel de la porteuse en liaison montante additionnelle différent de la fréquence de porteuse en liaison montante additionnelle.

22. Le procédé selon la revendication 21, dans lequel le paramètre additionnel comprend au moins un paramètre parmi une bande passante, un signal de référence de sondage et un canal de commande en liaison montante physique de la porteuse en liaison montante additionnelle.

23. Le procédé selon l'une quelconque des revendications 19 à 22, dans lequel l'information relative à la fréquence de porteuse en liaison montante additionnelle comprend en outre une information relative à au moins une information parmi une bande passante, un signal de référence de sondage et un canal de commande en liaison montante physique de la porteuse en liaison montante additionnelle.

24. Un produit de programme informatique comprenant un programme contenant des parties de code logiciel qui sont agencées, lorsqu'elles sont exécutées sur un processeur d'un appareil, de façon à exécuter le procédé selon l'une quelconque des revendications 14 à 23.

25. Le produit de programme informatique selon la revendication 24, dans lequel le produit de programme informatique comprend un support lisible par ordinateur sur lequel les parties de code logiciel sont conservées en mémoire, et/ou dans lequel le programme peut être directement chargé dans une mémoire du processeur.
